# EUROPEAN PATENT APPLICATION

(11) **EP 4 831 708 A1**
(43) Date of publication of application: **28.10.2026**
(21) Application number: 24907440.2
(22) Date of filing: 18.12.2024
(51) Int. Cl.: G02B 6/44

(54) **OPTICAL FIBER CABLE**

(30) Priority: 18.12.2023 JP 2023212967
(71) Applicant: Sumitomo Electric Industries, Ltd., Osaka-shi, Osaka 541-0041 (JP)
(72) Inventor: SATO Fumiaki, Osaka-shi, Osaka 541-0041 (JP); AKIYAMA Takemasa, Osaka-shi, Osaka 541-0041 (JP); KIMURA Toyoaki, Osaka-shi, Osaka 541-0041 (JP)
(74) Representative: Müller-Boré & Partner Patentanwälte PartG mbB
(86) International application number: PCT/JP2024/044721
(87) International publication number: WO 2025/135055

(57) **Abstract**

This optical fiber cable comprises: a plurality of coated optical fibers; a cable jacket covering the plurality of coated optical fibers; and a plurality of tension member groups embedded in the cable jacket and each including a plurality of tension members. A plurality of groups of the tension members are arranged along the circumferential direction of the cable jacket in a cross section perpendicular to the axial direction of the optical fiber cable. Given that the outer diameter of the tension member is R, the shortest distance D between adjacent tension member groups among the tension member groups satisfies the condition 3R < D ≤ 7R.

## Description

### TECHNICAL FIELD

The present disclosure relates to an optical fiber cable. This application claims priority based on Japanese Patent Application No. 2023-212967, filed on December 18, 2023, the entire contents of which are incorporated herein by reference.

### BACKGROUND ART

Patent Literature 1 discloses an optical fiber cable having a structure in which tension member groups adjacent to each other are separated from each other in order to achieve sufficient straightness and flexibility.

### CITATION LIST

### PATENT LITERATURE

Patent Literature 1: WO2023/120483

### SUMMARY OF INVENTION

An optical fiber cable of the present disclosure includes a plurality of optical fibers, a cable sheath covering the plurality of optical fibers, and a plurality of tension member groups embedded in the cable sheath, each of the tension member groups including a plurality of tension members, in which the plurality of tension member groups are arranged in a circumferential direction of the cable sheath in a cross section perpendicular to an axial direction of the optical fiber cable, and when an outer diameter of each of the tension members is defined as R, a minimum distance D between the tension member groups adjacent to each other among the plurality of tension member groups satisfies a condition of 3R < D ≤ 7R.

According to the present disclosure, it is possible to provide an optical fiber cable having low anisotropy in a bending direction of the cable.

### BRIEF DESCRIPTION OF DRAWINGS

FIG. 1 is a cross-sectional view of an optical fiber cable according to an embodiment of the present disclosure.
FIG. 2 is a cross-sectional view of an optical fiber cable according to a comparative example.

### DESCRIPTIONS OF EMBODIMENTS

### Technical Problem

An optical fiber cable for air blowing is desired to have a long blowing distance when installed inside a duct. In order to extend the blowing distance, it is important that the optical fiber cable has sufficient straightness and flexibility, and that the bending stiffness of the optical fiber cable is substantially the same regardless of any direction in which the optical fiber cable is bent, that is, the anisotropy in the bending direction is low. However, optical fiber cables of the related art exhibit high bending directionality, which may result in a short blowing distance.

### Advantageous Effects of Present Disclosure

According to the present disclosure, it is possible to provide an optical fiber cable having low anisotropy in the bending direction of the cable.

### Description of Embodiments of Present Disclosure

First, an embodiment of the present disclosure will be listed and described.
(1) An optical fiber cable of the present disclosure includes a plurality of optical fibers, a cable sheath covering the plurality of optical fibers, and a plurality of tension member groups embedded in the cable sheath, each of the plurality of tension member groups including a plurality of tension members, in which the plurality of tension member groups are arranged in a circumferential direction of the cable sheath in a cross section perpendicular to an axial direction of the optical fiber cable, and when an outer diameter of each of the plurality of tension members is defined as R, a minimum distance D between the tension member groups adjacent to each other among the plurality of tension member groups satisfies a condition of 3R < D ≤ 7R.
   By satisfying the condition of 3R < D, the optical fiber cable has sufficient flexibility. Furthermore, by satisfying the condition of D ≤ 7R, an optical fiber cable having low anisotropy in the bending direction can be obtained.
(2) In the above (1), the number of the plurality of tension member groups may be two.
   By setting the number of tension member groups to two, the tension members can be arranged more uniformly in the circumferential direction of the cable cross section, whereby an optical fiber cable excellent in temperature characteristics and tensile strength can be obtained.
(3) In the above (1) or (2), a ripcord may be disposed between the tension member groups adjacent to each other.
   By arranging the ripcord between the tension member groups, the arrangement position of the ripcord can be shifted from the arrangement positions of the tension members, thereby making it easier to arrange the ripcord inside the cable sheath. Furthermore, the tension members do not interfere when the sheath is torn.
(4) In any one of the above (1) to (3), the tension members included in the tension member group may not be in contact with each other, and a minimum distance between the tension members adjacent to each other may be 0.05 mm or more.

By setting the minimum distance between the tension members adjacent to each other to 0.05 mm or more, sufficient adhesion can be maintained between each tension member and the cable sheath, and expansion and contraction of the cable sheath due to temperature changes can be suitably prevented.

### Details of Embodiments of Present Disclosure

Specific examples of an optical fiber cable according to the present disclosure will be described below with reference to the drawings. It is noted that the present invention is not limited to these examples, but is indicated by the scope of the claims, and is intended to include all modifications within the meaning and scope equivalent to the scope of the claims.

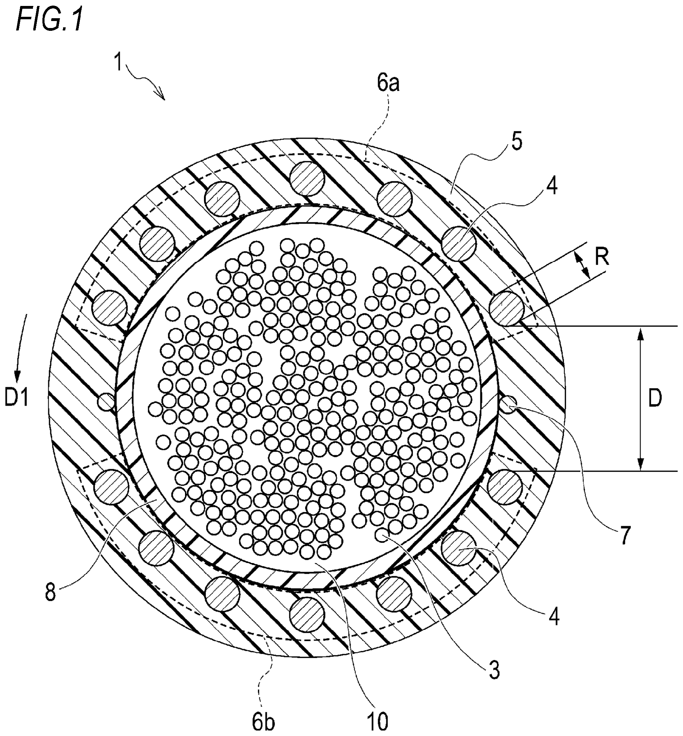

FIG. 1 is a cross-sectional view of an optical fiber cable 1 according to the present embodiment. The cross section of the optical fiber cable 1 illustrated in FIG. 1 is a cross section perpendicular to the axial direction of the optical fiber cable 1. As illustrated in FIG. 1, the optical fiber cable 1 includes a plurality of optical fibers 3, a water-absorbing tape 8, a ripcord 7, a cable sheath 5, and a plurality of tension member groups 6a and 6b. The outer diameter of the optical fiber cable 1 is, for example, 5 mm or more to 20 mm or less.

The optical fiber cable 1 is, for example, an optical fiber cable for air blowing that is pneumatically fed through a duct such as a microduct. The plurality of optical fibers 3 are housed in a housing space 10 of the optical fiber cable 1. The plurality of optical fibers 3 extend in the axial direction of the optical fiber cable 1. The plurality of optical fibers 3 may be spirally stranded in the axial direction. Each of the optical fibers 3 includes a glass fiber and a resin coating covering the glass fiber. The glass fiber has at least one core through which signal light propagates and a cladding covering the core. The refractive index of the core is greater than the refractive index of the cladding.

In this example, although the plurality of individual optical fibers 3 are housed in the housing space 10, a plurality of optical fiber ribbons each including the plurality of optical fibers 3 may be housed in the housing space 10. In this case, the optical fiber ribbon may be, for example, an intermittently bonded optical fiber ribbon in which adjacent optical fibers among the plurality of optical fibers arranged in parallel are intermittently bonded in the axial direction. Alternatively, the plurality of optical fiber ribbons may be spirally stranded in the axial direction of the optical fiber cable 1.

The water-absorbing tape 8 is wound around the entire periphery of the plurality of optical fibers 3 by, for example, longitudinal wrapping or spiral wrapping. The water-absorbing tape 8 is, for example, a tape subjected to water-absorption processing by causing water-absorbing powder to adhere to a base fabric containing polyester. The ripcord 7 is embedded in the cable sheath 5 and is used to tear the cable sheath 5. In this example, two ripcords 7 are provided in the optical fiber cable 1. By pulling out the ripcord 7, the cable sheath 5 can be torn in the axial direction (longitudinal direction), and as a result, the optical fiber 3 can be taken out. The ripcord 7 is formed of, for example, a high-tensile plastic material (for example, polyester).

The cable sheath 5 is provided to cover the periphery of the plurality of optical fibers 3. The cable sheath 5 is formed of, for example, a resin such as polyvinyl chloride (PVC) or polyethylene (PE). The resin of the cable sheath 5 may have a Young's modulus of 500 MPa or more. The cable sheath 5 may also contain a silicone-based release agent. The silicone-based release agent may be contained in a proportion of, for example, 2% by mass or more, or may be contained in a proportion of 3% by mass or more and 5% by mass or less.

The cable sheath 5 may also be formed of a resin having high flame retardance. The cable sheath 5 is formed of, for example, flame-retardant PVC or flame-retardant polyethylene having an oxygen index of 50 or more. Accordingly, the optical fiber cable 1 complies with the UL1666 Riser grade in the North American NEC (National Electrical Code) standard and the Cca class in the European CPR (Construction Products Regulation) standard. The cable sheath 5 is formed of, for example, a thermoplastic resin, and is formed by extrusion-molding the resin over the plurality of optical fibers 3 around which the water-absorbing tape 8 is wound.

Two tension member groups 6a and 6b are embedded in the cable sheath 5. The tension member groups 6a and 6b are arranged in a circumferential direction D1 of the cable sheath 5 in the cross section of the optical fiber cable 1 in FIG. 1. Each of the tension member groups 6a and 6b includes seven tension members 4.

The tension member 4 is formed of a high-tensile material. Specifically, the tension member 4 may be formed of fiber-reinforced plastic (FRP) such as aramid FRP, glass FRP, or carbon FRP. The cross section of each tension member 4 has an approximately circular shape. An outer diameter R of each tension member 4 is, for example, 0.2 mm or more and 2 mm or less. Each tension member 4 extends in the axial direction of the optical fiber cable 1. The tension members 4 included in the tension member groups 6a and 6b do not contact each other. For example, the minimum distance between the tension members 4 adjacent to each other is 0.05 mm or more.

The minimum distance between the tension members 4 adjacent to each other is different from a minimum distance D between the tension member groups adjacent to each other. More specifically, the minimum distance between the tension members 4 adjacent to each other is smaller than the minimum distance D between the tension member groups 6a and 6b adjacent to each other. In this manner, the tension member group defined in the present embodiment is a group in which a plurality of tension members included in the tension member group are densely arranged to form a group.

Furthermore, the tension member groups 6a and 6b adjacent to each other are separated from each other. As illustrated in FIG. 1, the minimum distance D between the tension member groups 6a and 6b adjacent to each other satisfies a condition of 3R < D ≤ 7R. It is noted that, as described above, R represents the outer diameter of the tension member 4.

Since the optical fiber cable 1 according to the present embodiment has a plurality of tension member groups and the distance D between the tension member groups satisfies the condition of 3R < D, flexibility can be improved while straightness of the optical fiber cable 1 is sufficiently maintained. Furthermore, since the distance D between the tension member groups satisfies the condition of D ≤ 7R, the anisotropy in the bending direction of the optical fiber cable 1 can be reduced. By reducing the anisotropy in the bending direction, it is possible to increase the blowing distance when the optical fiber cable 1 is introduced into a duct.

Although the optical fiber cable 1 of the present embodiment has two tension member groups, the number of tension member groups in the optical fiber cable of the present disclosure is not particularly limited and may be, for example, two or more to four or less. When there are three or more tension member groups, the minimum distance D between any two tension member groups adjacent to each other satisfies the condition of 3R < D ≤ 7R. A space between the tension member groups in the circumferential direction of the optical fiber cable may be the same or different, but the minimum distance D between the tension member groups adjacent to each other satisfies the condition of 3R < D ≤ 7R in both cases. It is noted that when the number of tension member groups is two, the tension members can be arranged more uniformly in the circumferential direction of the cable cross section, and the temperature characteristics and tensile strength of the optical fiber cable can be improved.

Although each of the tension member groups 6a and 6b of the present embodiment includes seven tension members, the number of tension members included in each tension member group is not particularly limited. When each tension member group includes three or more tension members, the straightness of the optical fiber cable is further improved. In particular, when the number of tension member groups is two, if each tension member group includes six or more tension members, an optical fiber cable having excellent straightness can be obtained.

In the optical fiber cable 1 of the present embodiment, the ripcord 7 is disposed between the tension member groups 6a and 6b adjacent to each other. Since the distance between the tension member groups 6a and 6b adjacent to each other is greater than the distance between the adjacent tension members 4 belonging to a single tension member group, disposing the ripcord 7 between the tension member groups 6a and 6b makes it easier to dispose the ripcord 7 in the cable sheath 5. Furthermore, the tension members do not interfere when the sheath is torn. It is noted that, in the optical fiber cable of the present disclosure, ripcords do not need to be disposed between all tension member groups adjacent to each other, and it is sufficient that a ripcord is disposed between at least one pair of tension member groups adjacent to each other.

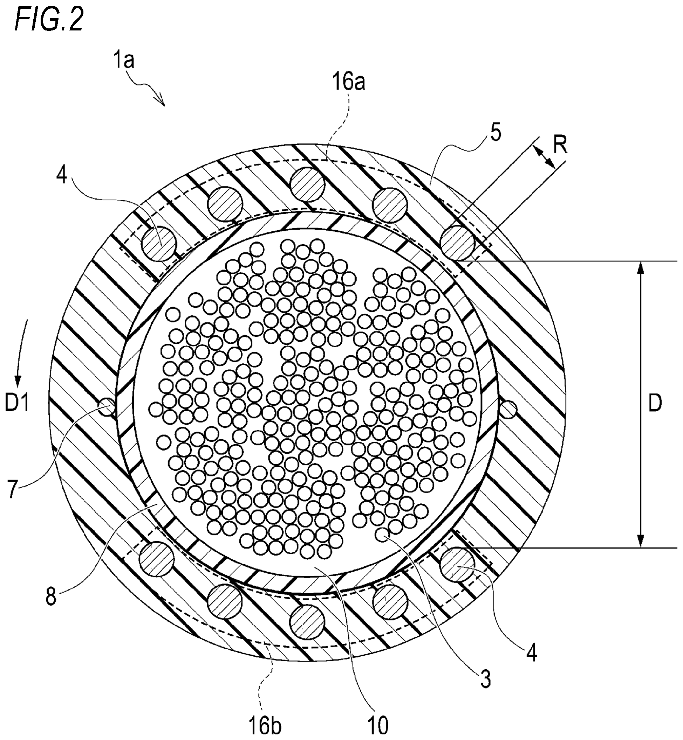

Next, an optical fiber cable 1a according to a comparative example will be described with reference to FIG. 2. Components common to the optical fiber cable 1 are denoted by the same reference numerals, and description thereof will be omitted. As illustrated in FIG. 2, in the optical fiber cable 1a according to the comparative example, the tension members 4 are disposed in the circumferential direction of the cable sheath 5. Each of tension member groups 16a and 16b includes five tension members 4. In the optical fiber cable 1a, a relationship between the distance D between the tension member groups 16a and 16b and the outer diameter R of the tension members 4 satisfies D > 7R. Since the optical fiber cable 1a satisfies the relationship of D > 7R, the anisotropy in the bending direction of the cable increases, thereby shortening the blowing distance when the cable is introduced into a duct.

### Example

In the configuration of the optical fiber cable illustrated in FIG. 1, a plurality of optical fiber cables having different minimum distances D between the tension member groups were prepared, and each optical fiber cable was introduced into the following test route using a blowing device to measure the blowing distance. The outer diameter of the optical fiber cable was 13 mm. The material of the tension member was aramid FRP, the diameter of the tension member was 0.5 mm, the number of tension members was seven, and the number of tension member groups was two. Table 1 shows the ratio (D/R) of the minimum distance D between the tension member groups to the outer diameter R of the tension members for each optical fiber cable, and the measurement results of the blowing distance. In Table 1, "TM" represents a tension member. (Test Route)
Total route length: 2,200 m
Circumferential length: 500 m
Number of 90° curves per turn: 8
Number of 180° curves per turn: 2
Curvature radius of curve: 1 m
Duct inner diameter: 18 mm

### Table 1

**Table 1**

| Distance between TM groups (D) / TM diameter (R) | Blowing distance (m) |
|---|---|
| 3 | 750 |
| 7 | 700 |
| 8 | 600 |
| 10 | 570 |
| 15 | 550 |

As shown in Table 1, the optical fiber cables satisfying the condition of D ≤ 7R achieved a satisfactory blowing distance of 700 m or more. These results indicate that, by satisfying the condition of D ≤ 7R for the minimum distance D between the tension member groups and the outer diameter R of the tension members, an optical fiber cable having low anisotropy in the bending direction and a long blowing distance can be obtained.

### REFERENCE SIGNS LIST

1, 1a: optical fiber cable
3: optical fiber
4: tension member
5: cable sheath
6a, 6b: tension member group
7: ripcord
8: water-absorbing tape
10: housing space
16a, 16b: tension member group
R: outer diameter of tension member
D: minimum distance between tension member groups adjacent to each other
D1: circumferential direction of cable sheath

## Claims

1. An optical fiber cable comprising:
a plurality of optical fibers;
a cable sheath covering the plurality of optical fibers; and
a plurality of tension member groups embedded in the cable sheath, each of the plurality of tension member groups including a plurality of tension members, wherein
the plurality of tension member groups are arranged in a circumferential direction of the cable sheath in a cross section perpendicular to an axial direction of the optical fiber cable, and
when an outer diameter of each of the plurality of tension members is defined as R, a minimum distance D between the tension member groups adjacent to each other among the plurality of tension member groups satisfies a condition of 3R < D ≤ 7R.

2. The optical fiber cable according to claim 1, wherein the number of the plurality of tension member groups is two.

3. The optical fiber cable according to claim 1 or 2, wherein a ripcord is disposed between the tension member groups adjacent to each other.

4. The optical fiber cable according to any one of claims 1 to 3, wherein each of the plurality of tension members included in the tension member group is not in contact with each other, and a minimum distance between the tension members adjacent to each other is 0.05 mm or more.
